# EUROPÄISCHE PATENTSCHRIFT

(11) **EP 3 374 216 B1**
(45) Veröffentlichungstag und Bekanntmachung des Hinweises auf die Patenterteilung: **21.08.2019**
(21) Anmeldenummer: 16791029.8
(22) Anmeldetag: 04.11.2016
(51) Int. Cl.: B60H 1/00, F25D 17/02

(54) **KLIMAANLAGE**
AIR-CONDITIONING SYSTEM
SYSTÈME DE CLIMATISATION

(30) Priorität: 11.11.2015 DE 102015222267
(43) Veröffentlichungstag der Anmeldung: 19.09.2018
(73) Patentinhaber: MAHLE International GmbH, 70376 Stuttgart (DE)
(72) Erfinder: HAUG, Joachim Michael, 74395 Mundelsheim (DE)
(74) Vertreter: Grauel, Andreas
(86) Internationale Anmeldenummer: PCT/EP2016/076736
(87) Internationale Veröffentlichungsnummer: WO 2017/080932

(56) Entgegenhaltungen:
- WO-A1-2013/023631
- DE-A1-102013 006 356
- DE-A1-102014 205 030

## Beschreibung

### Technisches Gebiet

Die Erfindung betrifft eine Klimaanlage, insbesondere für ein Kraftfahrzeug.

### Stand der Technik

Eine Klimaanlage gemäß Oberbegriff des Anspruchs 1 ist aus der DE 10 2014 205 030 A1 bekannt. Klimaanlagen gehören zur Standardausstattung vieler Kraftfahrzeuge und dienen insbesondere zur Regulierung der Temperatur im Inneren der Fahrzeugkabine und damit dem Komfort der Fahrzeuginsassen. In Kraftfahrzeugen, die mittels eines Verbrennungsmotors angetrieben werden, erfolgt die Beheizung der Fahrzeugkabine üblicherweise über die Aufnahme der Abwärme des Verbrennungsmotors durch ein in einem Kühlmittelkreislauf der Klimaanlage zirkulierendes Kühlmittel. Bei Hybridfahrzeugen mit einem Elektro- und einem Verbrennungsmotor fällt insgesamt entsprechend weniger Abwärme an, welche für die Beheizung der Fahrzeugkabine zur Verfügung steht. Die Motoren rein elektrisch über eine Batterie betriebener Fahrzeuge erzeugen nur in sehr geringem Maße verwendbare Abwärme, die an der elektrischen Maschine und an der Leistungselektronik anfällt. Daher kommen in diesem auch als Elektrofahrzeug bezeichneten Fahrzeugtyp beispielsweise zusätzliche elektrische Heizungen zum Einsatz. Nachteilig an dieser Lösung ist, dass hierbei ein zusätzlicher elektrischer Leistungsaufwand anfällt, welcher die Reichweite des Elektrofahrzeugs durch die Beanspruchung der Batterie verringert. Aus diesem Grund kann zur Beheizung der Kraftfahrzeugkabine in vielen Fällen ein Außenwärmeübertrager verwendet werden, welcher Energie aus der Außenluft des Kraftfahrzeugs entnimmt und an den Kühlmittelkreislauf der Klimaanlage abgibt. Eine entsprechende Klimaanlage weist üblicherweise einen geschlossenen Kältemittelkreislauf, in dem ein Kältemittel zirkuliert, mit einem Kompressor, einem Verdampfer, einem Expansionsventil und mindestens einem Wärmeübertrager auf. Der Kältemittelkreislauf gibt Wärme an ein Kühlmittel ab, welches in einem ebenfalls geschlossenen Kühlmittelkreislauf zirkuliert. Die Wärme wird dann vom Kühlmittel an einen Heizkörper abgegeben, mittels welcher ein in die Kraftfahrzeugkabine gerichteter Luftstrom erwärmt wird.

Problematisch an dieser Lösung ist, dass bei tiefen Außentemperaturen, insbesondere bei Außentemperaturen um den Gefrierpunkt und darunter, am Außenwärmeübertrager anfallendes Kondensat gefrieren kann. Die Wärmeübertragung wird dadurch verringert und somit die Effizienz des Außenwärmeübertragers durch einen erschwerten Wärmeübergang verringert. Nimmt die Dicke der sich bildenden Eisschicht zu, wird darüber hinaus der Strömungsweg der Luft zunehmend blockiert.

Um diesem Problem zu begegnen, können entsprechende Klimaanlagen häufig in einen Betriebszustand zum Abtauen des am Außenwärmeübertragers gebildeten Kondensats geschaltet werden. Während der Dauer dieses Betriebszustands "Abtauen" nimmt der Kühlmittelkreislauf praktisch keine Energie aus der Außenluft auf. Alternativ kann zur Überbrückung der Dauer des Betriebszustands "Abtauen" Wärmeenergie aus einem mit einem geeigneten Trägermedium gefüllten Pufferspeicher bereitgestellt und mittels Durchführung durch den Außenwärmeübertrager zu dessen Enteisung verwendet werden. Nachteilig an dieser Lösung ist, dass der Verbau eines Pufferspeichers im Kraftfahrzeug zusätzlichen Bauraum erfordert und das Gewicht des Kraftfahrzeugs erhöht.

### Darstellung der Erfindung, Aufgabe, Lösung, Vorteile

Es ist daher die Aufgabe der Erfindung, eine verbesserte Klimaanlage bereitzustellen, die auch bei niedrigen Außentemperaturen energieeffizient betreibbar ist.

Die Aufgabe zur Klimaanlage wird mit den Merkmalen des Anspruchs 1 gelöst.

Ein Ausführungsbeispiel der Erfindung betrifft eine Klimaanlage, insbesondere für ein Kraftfahrzeug, mit einem Kältemittelkreislauf mit einem Verdampfer und mit einem Kondensator und mit einem Kühlmittelkreislauf, wobei der Kältemittelkreislauf und der Kühlmittelkreislauf insbesondere im Bereich des Verdampfers und im Bereich des Kondensators miteinander thermisch gekoppelt sind, wobei der Kühlmittelkreislauf ein Leitungssystem mit Knotenpunkten aufweist, wobei in das Leitungssystem ein Heizkörper, ein Kühlkörper, ein Außenwärmeübertrager, eine zusätzliche Wärmequelle, eine erste Bypassleitung und eine zweite Bypassleitung integriert sind, wobei die erste Bypassleitung die zusätzliche Wärmequelle von dem Kühlkörper aus hin zum Außenwärmeübertrager überbrückt und/oder die zweite Bypassleitung die zusätzliche Wärmequelle von dem Heizkörper aus hin zum Außenwärmeübertrager überbrückt. Über den Kühlmittelkreislauf kann ein erwärmtes Kühlmittel, beispielsweise Kühlwasser, zum Heizkörper strömen. Dabei wird ein über die Oberfläche des Heizkörpers geführter Luftstrom erwärmt. Der erwärmte Luftstrom wird vorzugsweise in eine Fahrzeugkabine geleitet und erwärmt diese. Gleichzeitig wird Außenluft, die am Außenwärmeübertrager entlangströmt, Energie zur Erwärmung des Kühlmittels entzogen. In vorteilhafter Weise wird auf diese Weise eine Energieeinsparung bei der Beheizung der Fahrzeugkabine erreicht. Bei elektrisch angetriebenen Fahrzeugen führt dies zu einer Erhöhung der Reichweite, da die Batterie geschont wird. Die zusätzliche Wärmequelle wird insbesondere dann eingeschaltet, wenn die Außenluft als Wärmequelle nicht ausreicht, beispielsweise bei tiefen Außentemperaturen. Die zusätzliche Wärmequelle wird dann zur Erwärmung des Kühlmittels verwendet. Besonders vorteilhaft ist die Zuschaltung der zusätzlichen Wärmequelle, wenn die Klimaanlage in einem Betriebszustand "Abtauen" arbeitet. In diesem Betriebszustand steht die Außenluft nicht als Wärmequelle zur Verfügung, da eine Jalousie den Außenwärmeübertrager zur Beschleunigung des Abtauvorgangs für die kalte Außenluft sperrt. Dabei wird durch das Zuschalten der zusätzlichen Wärmequelle während des Abtauvorgangs einem Absinken der Temperatur des Heizkörpers unter einen eingestellten Sollwert entgegengewirkt.

Eine weitere Ausführungsform der Klimaanlage sieht vor, dass die zusätzliche Wärmequelle in einem in der Strömungsrichtung vor dem Außenwärmeübertrager angeordneten Bereich angeordnet ist, wobei zwischen der zusätzlichen Wärmequelle und dem Außenwärmeübertrager ein erster Knotenpunkt mit einem über ein Kontrollmittel steuerbaren Mehrwegeventil angeordnet ist, welcher die zusätzliche Wärmequelle und den Außenwärmeübertrager miteinander verbindet. Dadurch ist die zusätzliche Wärmequelle innerhalb des Kühlmittelkreislaufs in unmittelbarer Nähe der Position des Außenwärmeübertragers angeordnet und auf zusätzliche Leitungsstücke oder Ventile kann weitestgehend verzichtet werden.

Bei einem zusätzlichen Ausführungsbeispiel der Klimaanlage ist das Leitungssystem des Kühlmittelkreislaufs aus zumindest zwei Zweigen, einem ersten Zweig und einem zweiten Zweig gebildet, wobei der erste Zweig zumindest den Kühlkörper und einen in der Strömungsrichtung zwischen dem Kühlkörper und der zusätzlichen Wärmequelle angeordneten zweiten Knotenpunkt aufweist und der zweite Zweig zumindest den Heizkörper und einen in der Strömungsrichtung zwischen dem Heizkörper und der zusätzlichen Wärmequelle angeordneten dritten Knotenpunkt aufweist, wobei die erste Bypassleitung den zweiten Knotenpunkt mit dem ersten Knotenpunkt verbindet und/oder die zweite Bypassleitung den dritten Knotenpunkt mit dem ersten Knotenpunkt verbindet, derart, dass die Bypassleitungen die zusätzliche Wärmequelle jeweils zum ersten Knotenpunkt hin überbrücken.

Eine weitere Ausführungsform der Klimaanlage sieht vor, dass in einem in der Strömungsrichtung vor der zusätzlichen Wärmequelle angeordneten Bereich ein vierter Knotenpunkt mit einem über ein Kontrollmittel steuerbaren Mehrwegeventil angeordnet ist, wobei der vierte Knotenpunkt mit der zusätzlichen Wärmequelle und mit dem zweiten Knotenpunkt verbunden ist.

Bei einem zusätzlichen Ausführungsbeispiel der Klimaanlage weist der zweite Zweig einen fünften Knotenpunkt mit einem über ein Kontrollmittel steuerbaren Mehrwegeventil auf, wobei der fünfte Knotenpunkt mit dem vierten Knotenpunkt und mit dem dritten Knotenpunkt und mit dem Kondensator verbunden ist.

Eine weitere Ausführungsform der Klimaanlage sieht vor, dass der erste Zweig einen sechsten Knotenpunkt mit einem über ein Kontrollmittel steuerbaren Mehrwegeventil aufweist, wobei der sechste Knotenpunkt mit dem Kühlkörper und mit dem zweiten Knotenpunkt und mit dem Verdampfer verbunden ist.

Bei einem weiteren Ausführungsbeispiel der Klimaanlage weist der erste Zweig einen siebten Knotenpunkt und einen achten Knotenpunkt auf und der zweite Zweig weist einen neunten Knotenpunkt auf, wobei der siebte Knotenpunkt mit dem Außenwärmeübertrager und mit dem achten Knotenpunkt sowie mit dem neunten Knotenpunkt verbunden ist, wobei der achte Knotenpunkt mit dem Kühlkörper und mit dem Verdampfer verbunden ist, wobei der neunte Knotenpunkt mit dem Kondensator und mit dem Heizkörper verbunden ist.

Eine zusätzliche Ausführungsform der Klimaanlage sieht vor, dass zwischen dem siebten Kontenpunkt und dem neunten Knotenpunkt ein über ein Kontrollmittel steuerbares erstes Sperrventil angeordnet ist und/oder zwischen dem siebten Knotenpunkt und dem achten Knotenpunt ein über ein Kontrollmittel steuerbares zweites Sperrventil angeordnet ist.

Bei einem weiteren Ausführungsbeispiel der Klimaanlage weist der Kältemittelkreislauf einen in einer Kältemittelströmungsrichtung hinter dem Kondensator angeordneten Ausgleichsbehälter, wie Kältemittelsammler, und/oder einen in der Kältemittelströmungsrichtung hinter dem Kondensator und/oder hinter dem Ausgleichsbehälter angeordneten Innenwärmeübertrager, wie inneren Wärmeübertrager, und/oder ein in der Kältemittelströmungsrichtung vor dem Verdampfer angeordnetes Expansionsventil und/oder einen in der Kältemittelströmungsrichtung vor dem Kondensator angeordneten Verdichter auf.

Eine besonders vorteilhafte Ausführungsform der Klimaanlage sieht vor, dass in einem ersten Betriebszustand "Heizen" der Klimaanlage
- die zusätzliche Wärmequelle ausgeschaltet ist,
- das erste Sperrventil geschlossen ist und das zweite Sperrventil geöffnet ist,
- das am sechsten Knotenpunkt angeordnete Mehrwegeventil derart eingestellt ist, dass Kühlmittel vom Verdampfer zum zweiten Knotenpunkt strömt und der Kühlmittelstrom zwischen dem sechsten Knotenpunkt und dem Kühlkörper unterbunden ist,
- das am fünften Knotenpunkt angeordnete Mehrwegeventil derart eingestellt ist, dass Kühlmittel vom Kondensator über den fünften Knotenpunkt und den dritten Knotenpunkt zum Heizkörper strömt, wobei der Kühlmittelstrom zwischen dem fünften Knotenpunkt und dem vierten Knotenpunkt unterbunden ist,
- das am vierten Knotenpunkt angeordnete Mehrwegeventil derart eingestellt ist, dass der Kühlmittelstrom zwischen dem zweiten Knotenpunkt und dem vierten Knotenpunkt unterbunden ist,
- das am ersten Knotenpunkt angeordnete Mehrwegeventil derart eingestellt ist, dass Kühlmittel vom zweiten Knotenpunt über die erste Bypassleitung und den ersten Knotenpunkt zum Außenwärmeübertrager strömt und der Kühlmittelstrom zwischen dem dritten Knotenpunkt und dem ersten Knotenpunkt über die zweite Bypassleitung unterbunden ist.

Bei einer weiteren Ausführungsform der Klimaanlage ist in einem zweiten Betriebszustand "Kühlen"
- die zusätzliche Wärmequelle ausgeschaltet,
- das erste Sperrventil geöffnet und das zweite Sperrventil geschlossen,
- das am sechsten Knotenpunkt angeordnete Mehrwegeventil derart eingestellt, dass Kühlmittel vom Verdampfer über den sechsten Knotenpunkt zum Kühlkörper strömt und der Kühlmittelstrom zwischen dem sechsten Knotenpunkt und dem zweiten Knotenpunkt unterbunden ist,
- das am fünften Knotenpunkt angeordnete Mehrwegeventil derart eingestellt, dass der Kühlmittelstrom zwischen dem fünften Knotenpunkt und dem dritten Knotenpunkt sowie dem Heizkörper unterbunden ist, wobei das Kühlmittel vom Kondensator über den fünften Knotenpunkt zum vierten Knotenpunkt strömt,
- das am vierten Knotenpunkt angeordnete Mehrwegeventil derart eingestellt, dass Kühlmittel vom fünften Knotenpunkt über den vierten Knotenpunkt und die zusätzliche Wärmequelle zum ersten Knotenpunkt strömt,
- das am ersten Knotenpunkt angeordnete Mehrwegeventil derart eingestellt, dass Kühlmittel vom vierten Knotenpunkt über die zusätzliche Wärmequelle und den ersten Knotenpunkt zum Außenwärmeübertrager strömt, wobei der Kühlmittelstrom zwischen dem zweiten Knotenpunkt und dem ersten Knotenpunkt über die erste Bypassleitung und der Kühlmittelstrom zwischen dem dritten Knotenpunkt und dem ersten Knotenpunkt über die zweite Bypassleitung unterbunden sind.

Ein zusätzliches Ausführungsbeispiel der Klimaanlage sieht vor, dass in einem dritten Betriebszustand "Reheat"
- die zusätzliche Wärmequelle ausgeschaltet ist,
- das erste Sperrventil geschlossen ist und das zweite Sperrventil geöffnet ist,
- das am sechsten Knotenpunkt angeordnete Mehrwegeventil derart eingestellt ist, dass der Kühlmittelstrom vom Verdampfer über den sechsten Knotenpunkt zum Kühlkörper geöffnet ist, wobei Kühlmittel vom Verdampfer über den sechsten Knotenpunkt zum zweiten Knotenpunkt strömt,
- das am fünften Knotenpunkt angeordnete Mehrwegeventil derart eingestellt ist, dass Kühlmittel vom Kondensator über den fünften Knotenpunkt zum Heizkörper strömt, wobei der Kühlmittelstrom vom fünften Knotenpunkt zum vierten Knotenpunkt unterbunden ist,
- das am ersten Knotenpunkt angeordnete Mehrwegeventil derart eingestellt ist, dass der Kühlmittelstrom zwischen dem dritten Knotenpunkt und dem ersten Knotenpunkt über die zweite Bypassleitung unterbunden ist, wobei Kühlmittel vom zweiten Knotenpunkt über die erste Bypassleitung und den ersten Knotenpunkt zum Außenwärmeübertrager strömt.

Bei einer weiteren Ausführungsform der Klimaanlage ist in einem vierten Betriebszustand "Zuheizen"
- die zusätzliche Wärmequelle eingeschaltet,
- das erste Sperrventil geschlossen und das zweite Sperrventil geöffnet,
- das am sechsten Knotenpunkt angeordnete Mehrwegeventil derart eingestellt, dass der Kühlmittelstrom zwischen dem sechsten Knotenpunkt und dem Kühlkörper sowie zwischen dem Kühlkörper und dem achten Knotenpunkt unterbunden ist, wobei das Kühlmittel vom Verdampfer über den sechsten Knotenpunkt zum zweiten Knotenpunkt strömt,
- das am fünften Knotenpunkt angeordnete Mehrwegeventil derart eingestellt, dass Kühlmittel vom Kondensator über den fünften Knotenpunkt zum vierten Knotenpunkt strömt, wobei der Kühlmittelstrom zwischen dem fünften Knotenpunkt und dem dritten Knotenpunkt unterbunden ist,
- das am vierten Knotenpunkt angeordnete Mehrwegeventil derart eingestellt, dass der Kühlmittelstrom zwischen dem zweiten Knotenpunkt und dem vierten Knotenpunkt unterbunden ist, wobei Kühlmittel vom Kondensator über den fünften Knotenpunkt, den vierten Knotenpunkt und die zusätzliche Wärmequelle zum ersten Knotenpunkt strömt,
- das am ersten Knotenpunkt angeordnete Mehrwegeventil derart eingestellt, dass Kühlmittel vom zweiten Knotenpunkt über den ersten Knotenpunkt zum Außenwärmeübertrager strömt, wobei Kühlmittel vom vierten Knotenpunkt über die zusätzliche Wärmequelle und den ersten Knotenpunkt zum Heizkörper strömt

Bei einer weiteren Ausführungsform der Klimaanlage ist in einem fünften Betriebszustand "Abtauen"
- die zusätzliche Wärmequelle eingeschaltet,
- das erste Sperrventil geschlossen und das zweite Sperrventil geöffnet,
- das am sechsten Knotenpunkt angeordnete Mehrwegeventil derart eingestellt, dass der Kühlmittelstrom zwischen dem sechsten Knotenpunkt und dem Kühlkörper sowie zwischen dem Kühlkörper und dem achten Knotenpunkt unterbunden ist, wobei das Kühlmittel vom Verdampfer über den sechsten Knotenpunkt zum zweiten Knotenpunkt strömt,
- das am fünften Knotenpunkt angeordnete Mehrwegeventil derart eingestellt, dass Kühlmittel vom Kondensator über den fünften Knotenpunkt zum Heizkörper strömt, wobei der Kühlmittelstrom vom fünften Knotenpunkt zum vierten Knotenpunkt unterbunden ist,
- das am vierten Knotenpunkt angeordnete Mehrwegeventil derart eingestellt, dass Kühlmittel vom zweiten Knotenpunkt über den vierten Knotenpunkt und die zusätzliche Wärmequelle zum ersten Knotenpunkt strömt,
- das am ersten Knotenpunkt angeordnete Mehrwegeventil derart eingestellt, dass das Kühlmittel vom vierten Knotenpunkt über die zusätzliche Wärmequelle und den ersten Knotenpunkt zum Außenwärmeübertrager strömt, wobei der Kühlmittelstrom zwischen dem zweiten Knotenpunkt und dem ersten Knotenpunkt über die erste Bypassleitung und der Kühlmittelstrom zwischen dem dritten Knotenpunkt und dem ersten Knotenpunkt über die zweite Bypassleitung unterbunden sind.

Eine zusätzliche Ausführungsform der Klimaanlage sieht vor, dass die zusätzliche Wärmequelle eine elektrische Wärmequelle, insbesondere eine elektrische Heizvorrichtung ist. Elektrische Heizvorrichtungen bieten den Vorteil, dass sie sich relativ schnell ein- und ausschalten lassen. Darüber hinaus sind sie unkompliziert in den Kühlmittelkreislauf integrierbar und auf einfache Weise steuerbar.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage zumindest eines Ausführungsbeispiels anhand der Figuren der Zeichnung näher erläutert. Es zeigen:
- Fig. 1: einen Schaltplan eines Kühlmittelkreislaufs einer erfindungsgemäßen Klimaanlage im Betriebszustand "Heizen",
- Fig. 2: einen Schaltplan eines Kühlmittelkreislaufs einer Klimaanlage gemäß Figur 1 im Betriebszustand "Kühlen",
- Fig. 3: einen Schaltplan eines Kühlmittelkreislaufs einer Klimaanlage gemäß Figur 1 im Betriebszustand "Reheat",
- Fig. 4: einen Schaltplan eines Kühlmittelkreislaufs einer Klimaanlage gemäß Figur 1 im Betriebszustand "Zuheizen", und
- Fig. 5: einen Schaltplan eines Kühlmittelkreislaufs einer Klimaanlage gemäß Figur 1 im Betriebszustand "Abtauen".

### Bevorzugte Ausführung der Erfindung

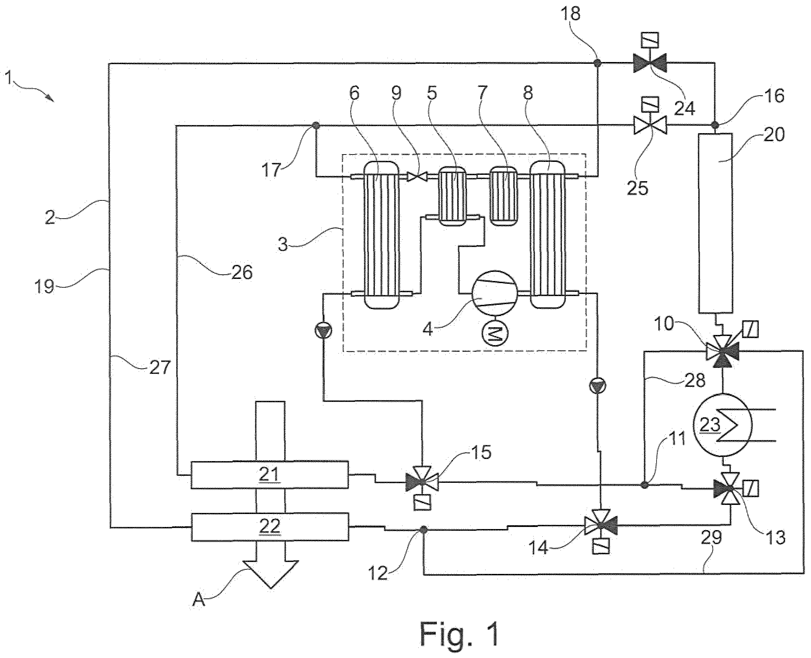

Figur 1 zeigt einen Schaltplan 1 einer nicht näher dargestellten Klimaanlage. Die Klimaanlage ist beispielhaft in einem Kraftfahrzeug angeordnet. Dabei kann die Klimaanlage der Beheizung und/oder Klimatisierung einer Kabine des Kraftfahrzeugs dienen. Der Schaltplan 1 weist einen Kühlmittelkreislauf 2 und einen Kältemittelkreislauf 3 auf. Der Kältemittelkreislauf 3 ist ein geschlossener Kreislauf und von einem Kältemittel durchströmbar. Der Kältemittelkreislauf 3 weist unter anderem einen Verdichter 4, einen Innenwärmeübertrager 5, einen Verdampfer 6, der beispielhaft als Chiller arbeitet, einen mit einer Trockner-/Filtereinheit ausgestatteten Ausgleichsbehälter 7, einen indirekten Kondensator 8 und ein Expansionsventil 9 auf.

Der Kühlmittelkreislauf weist beispielhaft neun Knotenpunkte 10, 11, 12, 13, 14, 15, 16, 17, 18 auf, an denen sich das Leitungssystem 19 des Kühlmittelkreislaufs 2 verzweigt. Im Bereich der Knotenpunkte 10, 11, 12, 13, 14, 15, 16, 17, 18 sind teilweise elektronisch steuerbare Mehrwegeventile angeordnet. Durch ein nicht dargestelltes Kontrollmittel lässt sich ein durch das Leitungssystem 19 des Kühlmittelkreislaufs 2 strömendes Kühlmittel über die Steuerung der Mehrwegeventile lenken.

Darüber hinaus weist der Kühlmittelkreislauf einen Außenwärmeübertrager 20, einen Kühlkörper 21, einen Heizkörper 22, eine zusätzliche Wärmequelle 23 sowie ein erstes Sperrventil 24 und ein zweites Sperrventil 25 auf. Die zusätzliche Wärmequelle 23 ist im Vorlauf des Außenwärmeübertragers 20 angeordnet.

Im Betrieb der Klimaanlage strömt Außenluft über den Außenwärmeübertrager 20, wobei der Luft beim Heizen/Zuheizen Wärme entzogen wird und im Falle des Kühlens bzw. Reheats Wärme an die Luft abgegeben wird. Dabei führt der Außenwärmeübertrager 20 dem Kühlmittelkreislauf 2 Energie in Form von Wärme zu. Der Kühlmittelkreislauf 2 ist im Bereich des Verdampfers 6 und des Kondensators 8 mit dem Kältemittelkreislauf 3 thermisch gekoppelt. Auf diese Weise kann Energie vom Kältemittelkreislauf 3 auf ein im Kühlmittelkreislauf 2 zirkulierendes Kühlmittel, beispielsweise Kühlwasser, übertragen werden.

Die zusätzliche Wärmequelle 23 ist bevorzugt eine elektrische Heizeinrichtung, die je nach Betriebszustand der Klimaanlage ein- und ausgeschaltet werden kann. Hierzu kann eine Steuerungs- und Regelungsvorrichtung vorgesehen sein, die beispielsweise auf Basis gemessener Temperaturen des Kühlmittels im Kühlmittelkreislauf 2 oder der Außenluft als Eingangsregelgröße funktioniert, Die zusätzliche Wärmequelle 23 dient dazu, in einem Betriebszustand "Abtauen" und in einem Betriebszustand "Zuheizen", insbesondere bei tiefen Außentemperaturen und/oder wenn der Außenwärmeübertrager 20 durch gefrorenes Kondensat vereist ist, Wärme bereitzustellen.

Die zusätzliche Wärmequelle 23 kann beispielhaft eine Leistung von 5 kW aufweisen. In alternativen Ausführungsvarianten der Klimaanlage können zusätzliche Wärmequellen eingesetzt sein, die eine andere Leistung als 5 kW aufweisen bzw. bedarfsgerecht einstellbar sind.

Im Kühlmittelkreislauf 2 strömt das Kühlmittel nach Durchströmen des Heizkörpers 22 zum Außenwärmeübertrager 20. Ist die Außentemperatur zu niedrig, um die für den Heizkörper 22 vorgesehene Soll-Temperatur zu erreichen und/oder ist der Außenwärmeübertrager 20 vereist, wird die zusätzliche Wärmequelle 23 eingeschaltet.

Der Kühlmittelkreislauf 2 weist einen ersten Zweig 26 und einen zweiten Zweig 27 auf, über deren unterschiedliche Verschaltung die Klimaanlage jeweils in die einzelnen Betriebszustände "Heizen", "Kühlen", "Reheat" (Entfeuchten), "Zuheizen" und "Abtauen" des Außenwärmeübertragers 20 versetzt wird. Im Bereich des ersten Zweigs 26 sind der Verdampfer 6, der Kühlkörper 21, der zweite Knotenpunkt 11, der sechste Knotenpunkt 15, der achte Knotenpunkt 17 und das zweite Sperrventil 25 angeordnet. Im Bereich des zweiten Zweigs 27 sind der Kondensator 8, der Heizkörper 22, der dritte Knotenpunkt 12, der fünfte Knotenpunkt 14, der neunte Knotenpunkt 18 und das erste Sperrventil 24 angeordnet.

Im Bereich des ersten Knotenpunkts 10, des vierten Knotenpunkts 13, des siebten Knotenpunkts 16 und des Außenwärmeübertragers überlagern sich der erste Zweig 26 und der zweite Zweig 27.

Die zusätzliche Wärmequelle 23 ist zwischen dem ersten Knotenpunkt 10 und dem vierten Knotenpunkt 13 angeordnet. Dabei ist der erste Knotenpunkt 10 zwischen der zusätzlichen Wärmequelle 23 und dem Außenwärmeübertrager 20 angeordnet.

Im Vorlauf des vierten Knotenpunkts 13 ist im Bereich des ersten Zweigs 26 der zweite Knotenpunkt 11 angeordnet. Im Vorlauf des zweiten Knotenpunkts 11 sind im Bereich des ersten Zweigs 26 der sechste Knotenpunkt 15 sowie der Kühlkörper 21 angeordnet. Zwischen dem zweiten Knotenpunkt 11 und dem ersten Knotenpunkt 10 ist eine erste Bypassleitung 28 angeordnet, welche die zusätzliche Wärmequelle 23 vom Kühlkörper 21 hin zum Außenwärmeübertrager 20 überbrückt,

Im Vorlauf des vierten Knotenpunkts 13 ist im Bereich des zweiten Zweigs 27 der fünfte Knotenpunkt 14 angeordnet. Im Vorlauf des fünften Knotenpunkts 14 sind im Bereich des zweiten Zweigs 27 der dritte Knotenpunkt 12 sowie der Heizkörper 22 angeordnet. Zwischen dem dritten Knotenpunkt 12 und dem ersten Knotenpunkt 10 ist eine zweite Bypassleitung 29 angeordnet, welche die zusätzliche Wärmequelle 23 vom Heizkörper 22 hin zum Außenwärmeübertrager 20 überbrückt.

In Figur 1 ist die Verschaltung des Kühlmittelkreislaufs 2 in einem ersten Betriebszustand "Heizen" dargestellt. Warme Luft, die mit dem Pfeil A bezeichnet ist, kann in die Fahrzeugkabine strömen. Die zusätzliche Wärmequelle 23 ist ausgeschaltet. Das erste Sperrventil 24 ist geschlossen und das zweite Sperrventil 25 ist geöffnet. Das Kühlmittel wird am Außenwärmeübertrager 20 erwärmt und strömt zum Verdampfer 6. Ein am sechsten Knotenpunkt 15 angeordnetes Mehrwegeventil ist derart eingestellt, dass das Kühlmittel vom Verdampfer 6 zum zweiten Knotenpunkt 11 strömt, jedoch nicht zu dem mit dem sechsten Knotenpunkt 15 verbundenen Kühlkörper 21 strömen kann. Über die erste Bypassleitung 28 strömt das Kühlmittel vom zweiten Knotenpunkt 11 weiter zum ersten Knotenpunkt 10. Ein am ersten Knotenpunkt 10 angeordnetes Mehrwegeventil ist derart eingestellt, dass das Kühlmittel über den ersten Knotenpunkt 10 zum Außenwärmeübertrager 20 strömt. Darüber hinaus blockiert das am ersten Knotenpunkt 10 angeordnete Mehrwegeventil den Zustrom von Kühlmittel durch die zweite Bypassleitung 29 zum Außenwärmeübertrager 20.

Ein an dem im Vorlauf der zusätzlichen Wärmequelle 23 angeordneten vierten Knotenpunkt 13 angeordnetes Mehrwegeventil ist derart eingestellt, dass kein Kühlmittel über die zusätzliche Wärmequelle 23 geleitet wird. Auf diese Weise wird die zusätzliche Wärmequelle 23 überbrückt.

Ein an dem mit dem Kondensator 8, dem Heizkörper 22 und dem vierten Knotenpunkt 13 verbundenen fünften Knotenpunkt 14 angeordnetes Mehrwegeventil ist derart eingestellt, dass das Kühlmittel vom Kondensator 8 zum Heizkörper 22 strömt, nicht jedoch zum vierten Knotenpunkt 13 bzw. nicht weiter zur zusätzlichen Wärmequelle 23.

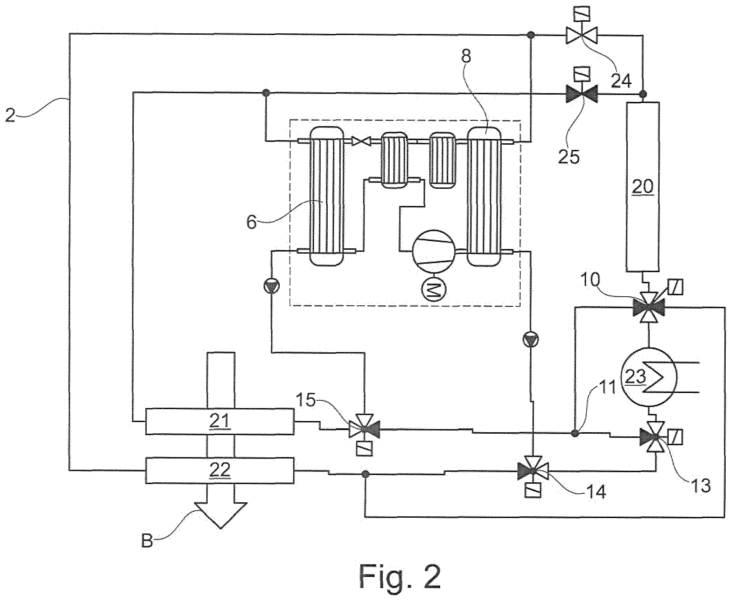

In der Figur 2 ist die Verschaltung eines Kühlmittelkreislaufs 2 einer Klimaanlage gemäß Figur 1 in einem zweiten Betriebszustand "Kühlen" dargestellt. Gleiche Teile sind mit gleichen Bezugszeichen versehen.

Kühle Luft, die mit dem Pfeil B bezeichnet ist, kann in die Fahrzeugkabine strömen. Die zusätzliche Wärmequelle 23 ist ausgeschaltet. Das erste Sperrventil 24 ist geöffnet und das zweite Sperrventil 25 ist geschlossen. Das Kühlmittel wird am Verdampfer 6 gekühlt und strömt über den sechsten Knotenpunkt 15 zum Kühlkörper 21. Das am sechsten Knotenpunkt 15 angeordnete Mehrwegeventil ist derart eingestellt, dass das Kühlmittel vom Verdampfer 6 bzw. vom sechsten Knotenpunkt 15 nicht weiter zum zweiten Knotenpunkt 11 bzw. zum Außenwärmeübertrager 20 strömt.

Das am fünften Knotenpunkt 14 angeordnete Mehrwegeventil ist derart eingestellt, dass kein Kühlmittel vom fünften Knotenpunkt 14 zum Heizkörper 22 strömt. Dabei strömt das Kühlmittel vom Kondensator 8 über den fünften Knotenpunkt 14 und den vierten Knotenpunkt 13 sowie über die ausgeschaltete zusätzliche Wärmequelle 23 und den ersten Knotenpunkt 10 zum Außenwärmeübertrager 20 und vom Außenwärmeübertrager 20 über das erste Sperrventil 24 zum Kondensator 8.

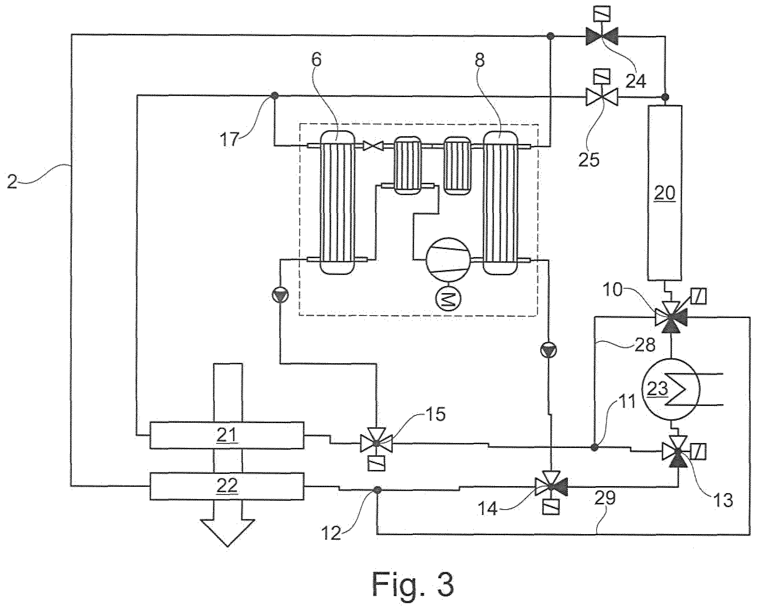

In der Figur 3 ist die Verschaltung eines Kühlmittelkreislaufs 2 einer Klimaanlage gemäß der Figur 1 in einem dritten Betriebszustand "Reheat" dargestellt. Gleiche Teile sind mit gleichen Bezugszeichen versehen. Der Betriebszustand "Reheat" wird zur Entfeuchtung der in der Fahrzeugkabine befindlichen Innenluft genutzt. Dabei erbringt die Klimaanlage gleichzeitig Kälteleistung zur Entfeuchtung der Innenluft und Heizleistung zu ihrer Wiedererwärmung.

Die zusätzliche Wärmequelle 23 ist im Betriebszustand "Reheat" ausgeschaltet. Das erste Sperrventil 24 ist geschlossen und das zweite Sperrventil 25 ist geöffnet. Das am sechsten Knotenpunkt 15 angeordnete Mehrwegeventil ist derart eingestellt, dass der Kühlmittelstrom vom Verdampfer 6 zum Kühlkörper 21 geöffnet ist. Dabei strömt Kühlmittel vom Verdampfer 6 über den sechsten Knotenpunkt 15 und die erste Bypassleitung 28 zum ersten Knotenpunkt 10 und vom ersten Knotenpunkt 10 weiter zum Außenwärmeübertrager 20.

Das am fünften Knotenpunkt 14 angeordnete Mehrwegeventil ist derart eingestellt, dass Kühlmittel vom Kondensator 8 über den fünften Knotenpunkt 14 zum Heizkörper 22 strömt, der Kühlmittelstrom vom fünften Knotenpunkt 14 zum vierten Knotenpunkt 13 jedoch unterbunden ist.

Das am ersten Knotenpunkt 10 angeordnete Mehrwegeventil ist derart eingestellt, dass der Kühlmittelstrom zwischen dem ersten Knotenpunkt 10 und dem dritten Knotenpunkt 12 über die zweite Bypassleitung 29 unterbunden ist. Gleichzeitig strömt Kühlmittel vom sechsten Knotenpunkt 15 über den zweiten Knotenpunkt 11 und die erste Bypassleitung 28 zum ersten Knotenpunkt 10 und von dort weiter zum Außenwärmeübertrager 20. Das am Außenwärmeübertrager 20 erwärmte Kühlmittel strömt anschließend über das geöffnete zweite Sperrventil 25 und den achten Knotenpunkt 17 zum Verdampfer 6.

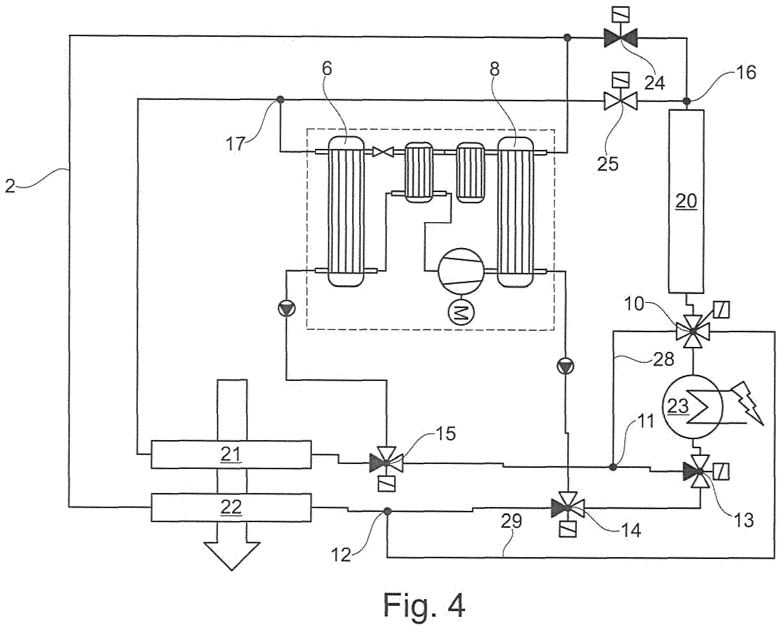

In der Figur 4 ist die Verschaltung eines Kühlmittelkreislaufs 2 einer Klimaanlage gemäß der Figur 1 in einem vierten Betriebszustand "Zuheizen" dargestellt. Gleiche Teile sind mit gleichen Bezugszeichen versehen. Der Betriebszustand "Zuheizen" ist sinnvoll, wenn bei tiefen Außentemperaturen die über den Außenwärmeübertrager zur Verfügung gestellte Wärme nicht ausreicht, um eine Heizleistung zu generieren, mittels derer die Temperatur des Heizkörpers auf den eingestellten Sollwert angehoben werden kann.

Die zusätzliche Wärmequelle 23 ist im Betriebszustand "Zuheizen" eingeschaltet. Gleichzeitig ist das erste Sperrventil 24 geschlossen und das zweite Sperrventil 25 ist geöffnet. Das am sechsten Knotenpunkt 15 angeordnete Mehrwegeventil ist derart eingestellt, dass der Kühlmittelstrom zwischen dem Verdampfer 6 und dem Kühlkörper 21 über den sechsten Knotenpunkt 15 unterbunden ist. Dabei strömt Kühlmittel vom Verdampfer 6 über den sechsten Knotenpunkt 15 zum zweiten Knotenpunkt 11 und vom zweiten Knotenpunkt 11 über die erste Bypassleitung 28 zum ersten Knotenpunkt 10. Das am ersten Knotenpunkt 10 angeordnete Mehrwegeventil ist dabei derart eingestellt, dass Kühlmittel vom ersten Knotenpunkt 10 zum Außenwärmeübertrager 20 strömt. Vom Außenwärmeübertrager 20 strömt das Kühlmittel über den siebten Knotenpunkt 16, das geöffnete zweite Sperrventil 25 und den achten Knotenpunkt 17 zum Verdampfer 6.

Die am fünften Knotenpunkt 14 und am vierten Knotenpunkt 13 angeordneten Mehrwegeventile sind derart eingestellt, dass Kühlmittel vom Kondensator 8 über den fünften Knotenpunkt 14 und den vierten Knotenpunkt 13 zu der eingeschalteten zusätzlichen Wärmequelle 23 strömt. Dabei ist das am ersten Knotenpunkt 10 angeordnete Mehrwegeventil derart eingestellt, dass von der zusätzlichen Wärmequelle 23 erwärmtes Kühlmittel über den ersten Knotenpunkt 10 und die zweite Bypassleitung 29 zum dritten Knotenpunkt 12 und weiter zum Heizkörper 22 strömt.

Der Außenwärmeübertrager 20 kann vereisen, wenn beispielsweise bei Kühlmitteltemperaturen oder bei Außentemperaturen unter 0° Celsius feuchte Außenluft über den Außenwärmeübertrager 20 strömt und die Kühlmitteltemperatur im Außenwärmeübertrager 20 unter 0° Celsius liegt. Durch die Eisbildung am Außenwärmeübertrager 20 verringert sich der für die Durchströmung mit Luft zur Verfügung stehende Strömungsquerschnitt und der über den Außenwärmeübertrager 20 entstehende luftseitige Druckabfall verstärkt sich. Dabei verringert sich der über den Außenwärmeübertrager 20 transportierte Luftmassenstrom. Ein reduzierter Luftmassenstrom sowie ein zusätzlicher Wärmeübergangswiderstand führen jedoch zu einer verringerten Wärmeabgabe an das Kühlmittel.

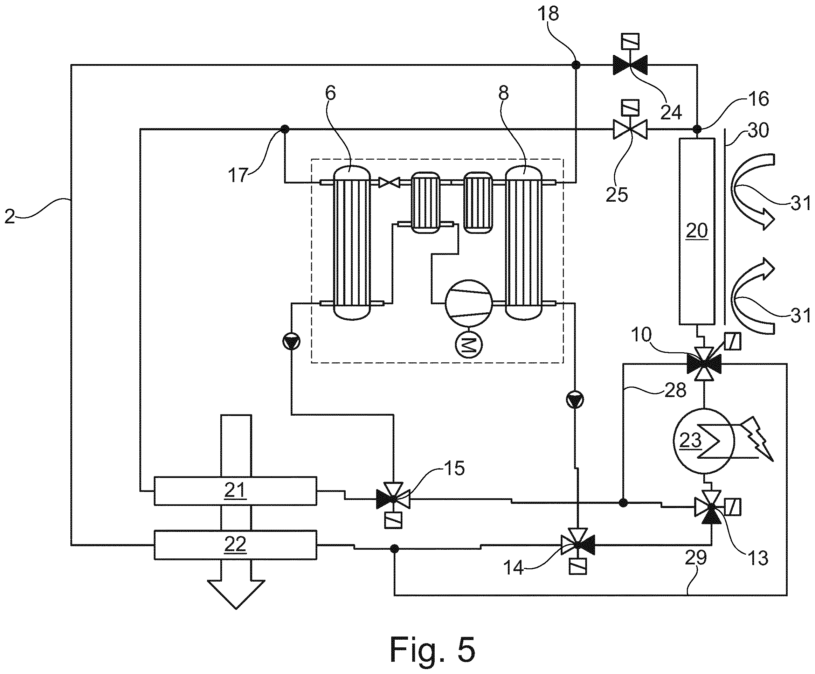

Aus diesem Grund weist die Klimaanlage einen fünften Betriebszustand "Abtauen" auf. In der Figur 5 ist die Verschaltung eines Kühlmittelkreislaufs 2 einer Klimaanlage gemäß der Figur 1 in diesem fünften Betriebszustand "Abtauen" dargestellt. Gleiche Teile sind mit gleichen Bezugszeichen versehen.

Während des Betriebszustands "Abtauen" verhindert eine vor dem Außenwärmeübertrager 20 eingesetzte Jalousie 30, dass kalte Außenluft über den Außenwärmeübertrager 20 strömt. Dies ist durch die Pfeile 31 verdeutlicht.

Der Einsatz der Jalousie 30 ist sinnvoll, da die kalte Außenluft andernfalls das mittels warmem Kühlmittel bewirkte Abtauen des Außenwärmeübertragers 20 verlangsamt. Während des Betriebszustands "Abtauen" steht der Außenwärmeübertrager 20 als Wärmequelle folglich nicht zur Verfügung. Daher ist die zusätzliche Wärmequelle 23 im Betriebszustand "Abtauen" eingeschaltet.

Gleichzeitig ist das erste Sperrventil 24 geschlossen und das zweite Sperrventil 25 ist geöffnet. Das am sechsten Knotenpunkt 15 angeordnete Mehrwegeventil ist derart eingestellt, dass der Kühlmittelstrom zwischen dem sechsten Knotenpunkt 15 und dem Kühlkörper 21 sowie zwischen dem achten Knotenpunkt 17 und dem Kühlkörper 21 unterbunden ist. Dabei strömt Kühlmittel vom Verdampfer 6 über den sechsten Knotenpunkt 15 zum vierten Knotenpunkt 13. Das am vierten Knotenpunkt 13 angeordnete Mehrwegeventil ist derart eingestellt, dass das Kühlmittel vom vierten Knotenpunkt 13 weiter zur eingeschalteten zusätzlichen Wärmequelle 23 strömt, wo es erwärmt wird. Das an dem stromaufwärts der zusätzlichen Wärmequelle 23 angeordneten ersten Knotenpunkt 10 angeordnete Mehrwegeventil ist derart eingestellt, dass das von der zusätzlichen Wärmequelle 23 erwärmte Kühlmittel über den ersten Knotenpunkt 10 zum Außenwärmeübertrager 20 strömt und zu dessen Enteisung beiträgt. Vom Außenwärmeübertrager 20 strömt das Kühlmittel über den siebten Knotenpunkt 16 und das geöffnete zweite Sperrventil 25 zum achten Knotenpunkt 17 und von dort zum Verdampfer 6.

Das am fünften Knotenpunkt 14 angeordnete Mehrwegeventil ist darüber hinaus derart eingestellt, dass Kühlmittel vom Kondensator 8 über den fünften Knotenpunkt 14 zum Heizkörper 22 strömt. Vom Heizkörper 22 strömt das Kühlmittel über den neunten Knotenpunkt 18 zum Kondensator 8. Das am ersten Knotenpunkt 10 angeordnete Mehrwegeventil ist darüber hinaus derart eingestellt, dass der Kühlmittelstrom über die erste Bypassleitung 28 und der Kühlmittelstrom über die zweite Bypassleitung 29 unterbunden sind.

## Patentansprüche

1. Klimaanlage, insbesondere für ein Kraftfahrzeug, mit einem Kältemittelkreislauf (3) mit einem Verdampfer (6) und mit einem Kondensator (8) und mit einem Kühlmittelkreislauf (2), wobei der Kältemittelkreislauf (3) und der Kühlmittelkreislauf (2) insbesondere im Bereich des Verdampfers (6) und im Bereich des Kondensators (8) miteinander thermisch gekoppelt sind, wobei der Kühlmittelkreislauf (2) ein Leitungssystem (19) mit Knotenpunkten (10, 11, 12, 13, 14, 15, 16, 17, 18) aufweist, wobei in das Leitungssystem (19) ein Heizkörper (22), ein Kühlkörper (21), ein Außenwärmeübertrager (20), eine zusätzliche Wärmequelle (23) integriert ist, **dadurch gekennzeichnet dass**:
eine erste Bypassleitung (28) und eine zweite Bypassleitung (29) in das Leitungssystem integriert sind, wobei die erste Bypassleitung (28) die zusätzliche Wärmequelle (23) von dem Kühlkörper (21) aus hin zum Außenwärmeübertrager (20) überbrückt und die zweite Bypassleitung (29) die zusätzliche Wärmequelle (23) von dem Heizkörper (22) aus hin zum Außenwärmeübertrager (20) überbrückt.

2. Klimaanlage nach Anspruch 1, **dadurch gekennzeichnet, dass** die zusätzliche Wärmequelle (23) in einem in der Strömungsrichtung vor dem Außenwärmeübertrager (20) angeordneten Bereich angeordnet ist, wobei zwischen der zusätzlichen Wärmequelle (23) und dem Außenwärmeübertrager (20) ein erster Knotenpunkt (10) mit einem über ein Kontrollmittel steuerbaren Ventil, wie Mehrwegeventil, angeordnet ist, welcher die zusätzliche Wärmequelle (23) und den Außenwärmeübertrager (20) miteinander verbindet.

3. Klimaanlage nach Anspruch 2, **dadurch gekennzeichnet, dass** das Leitungssystem (19) des Kühlmittelkreislaufs (2) aus zumindest zwei Zweigen (26, 27), einem ersten Zweig (26) und einem zweiten Zweig (27) gebildet ist, wobei der erste Zweig (26) zumindest den Kühlkörper (21) und einen in der Strömungsrichtung zwischen dem Kühlkörper (21) und der zusätzlichen Wärmequelle (23) angeordneten zweiten Knotenpunkt (11) aufweist und der zweite Zweig (27) zumindest den Heizkörper (22) und einen in der Strömungsrichtung zwischen dem Heizkörper (22) und der zusätzlichen Wärmequelle (23) angeordneten dritten Knotenpunkt (12) aufweist, wobei die erste Bypassleitung (28) den zweiten Knotenpunkt (11) mit dem ersten Knotenpunkt (10) verbindet und/oder die zweite Bypassleitung (29) den dritten Knotenpunkt (12) mit dem ersten Knotenpunkt (10) verbindet, derart, dass die Bypassleitungen (28, 29) die zusätzliche Wärmequelle (23) jeweils zum ersten Knotenpunkt (10) hin überbrücken.

4. Klimaanlage nach Anspruch 3, **dadurch gekennzeichnet, dass** in einem in der Strömungsrichtung vor der zusätzlichen Wärmequelle (23) angeordneten Bereich ein vierter Knotenpunkt (13) mit einem über ein Kontrollmittel steuerbaren Ventil, wie Mehrwegeventil, angeordnet ist, wobei der vierte Knotenpunkt (13) mit der zusätzlichen Wärmequelle (23) und mit dem zweiten Knotenpunkt (11) verbunden ist.

5. Klimaanlage nach Anspruch 4, **dadurch gekennzeichnet, dass** der zweite Zweig (27) einen fünften Knotenpunkt (14) mit einem über ein Kontrollmittel steuerbaren Ventil, wie Mehrwegeventil, aufweist, wobei der fünfte Knotenpunkt (14) mit dem vierten Knotenpunkt (13) und mit dem dritten Knotenpunkt (12) und mit dem Kondensator (8) verbunden ist.

6. Klimaanlage nach Anspruch 5, **dadurch gekennzeichnet, dass** der erste Zweig (26) einen sechsten Knotenpunkt (15) mit einem über ein Kontrollmittel steuerbaren Ventil, wie Mehrwegeventil, aufweist, wobei der sechste Knotenpunkt (15) mit dem Kühlkörper (21) und mit dem zweiten Knotenpunkt (11) und mit dem Verdampfer (6) verbunden ist.

7. Klimaanlage nach Anspruch 6, **dadurch gekennzeichnet, dass** der erste Zweig (26) einen siebten Knotenpunkt (16) und einen achten Knotenpunkt (17) aufweist und der zweite Zweig (27) einen neunten Knotenpunkt (18) aufweist, wobei der siebte Knotenpunkt (16) mit dem Außenwärmeübertrager (20) und mit dem achten Knotenpunkt (17) sowie mit dem neunten Knotenpunkt (18) verbunden ist, wobei der achte Knotenpunkt (17) mit dem Kühlkörper (21) und mit dem Verdampfer (6) verbunden ist, wobei der neunte Knotenpunkt (18) mit dem Kondensator (8) und mit dem Heizkörper (22) verbunden ist.

8. Klimaanlage nach Anspruch 7, **dadurch gekennzeichnet, dass** zwischen dem siebten Kontenpunkt (16) und dem neunten Knotenpunkt (18) ein über ein Kontrollmittel steuerbares erstes Sperrventil (24) angeordnet ist und/oder zwischen dem siebten Knotenpunkt (16) und dem achten Knotenpunt (17) ein über ein Kontrollmittel steuerbares zweites Sperrventil (25) angeordnet ist.

9. Klimaanlage nach einem der vorhergehenden Ansprüche, **dadurch gekennzeichnet, dass** der Kältemittelkreislauf (3) einen in einer Kältemittelströmungsrichtung hinter dem Kondensator (8) angeordneten Ausgleichsbehälter (7) und/oder einen in der Kältemittelströmungsrichtung hinter dem Kondensator (8) und/oder hinter dem Ausgleichsbehälter (7) angeordneten Innenwärmeübertrager (5) und/oder ein in der Kältemittelströmungsrichtung vor dem Verdampfer (6) angeordnetes Expansionsventil (9) und/oder einen in der Kältemittelströmungsrichtung vor dem Kondensator (8) angeordneten Verdichter (4) aufweist.

10. Klimaanlage nach einem der vorhergehenden Ansprüche 6-8, **dadurch gekennzeichnet, dass** in einem ersten Betriebszustand "Heizen" der Klimaanlage
- die zusätzliche Wärmequelle (23) ausgeschaltet ist,
- das erste Sperrventil (24) geschlossen ist und das zweite Sperrventil (25) geöffnet ist,
- das am sechsten Knotenpunkt (15) angeordnete Mehrwegeventil derart eingestellt ist, dass Kühlmittel vom Verdampfer (6) zum zweiten Knotenpunkt (11) strömt und der Kühlmittelstrom zwischen dem sechsten Knotenpunkt (15) und dem Kühlkörper (21) unterbunden ist,
- das am fünften Knotenpunkt (14) angeordnete Mehrwegeventil derart eingestellt ist, dass Kühlmittel vom Kondensator (8) über den fünften Knotenpunkt (14) und den dritten Knotenpunkt (12) zum Heizkörper (22) strömt, wobei der Kühlmittelstrom zwischen dem fünften Knotenpunkt (14) und dem vierten Knotenpunkt (13) unterbunden ist,
- das am vierten Knotenpunkt (13) angeordnete Mehrwegeventil derart eingestellt ist, dass der Kühlmittelstrom zwischen dem zweiten Knotenpunkt (11) und dem vierten Knotenpunkt (13) unterbunden ist,
- das am ersten Knotenpunkt (10) angeordnete Mehrwegeventil derart eingestellt ist, dass Kühlmittel vom zweiten Knotenpunt (11) über die erste Bypassleitung (28) und den ersten Knotenpunkt (10) zum Außenwärmeübertrager (20) strömt und der Kühlmittelstrom zwischen dem dritten Knotenpunkt (12) und dem ersten Knotenpunkt (10) über die zweite Bypassleitung (29) unterbunden ist.

11. Klimaanlage nach einem der vorhergehenden Ansprüche 6-8, **dadurch gekennzeichnet, dass** in einem zweiten Betriebszustand "Kühlen"
- die zusätzliche Wärmequelle (23) ausgeschaltet ist,
- das erste Sperrventil (24) geöffnet ist und das zweite Sperrventil (25) geschlossen ist,
- das am sechsten Knotenpunkt (15) angeordnete Mehrwegeventil derart eingestellt ist, dass Kühlmittel vom Verdampfer (6) über den sechsten Knotenpunkt (15) zum Kühlkörper (21) strömt und der Kühlmittelstrom zwischen dem sechsten Knotenpunkt (15) und dem zweiten Knotenpunkt (11) unterbunden ist,
- das am fünften Knotenpunkt (14) angeordnete Mehrwegeventil derart eingestellt ist, dass der Kühlmittelstrom zwischen dem fünften Knotenpunkt (14) und dem dritten Knotenpunkt (12) sowie dem Heizkörper (22) unterbunden ist, wobei das Kühlmittel vom Kondensator (8) über den fünften Knotenpunkt (14) zum vierten Knotenpunkt (13) strömt,
- das am vierten Knotenpunkt (13) angeordnete Mehrwegeventil derart eingestellt ist, dass Kühlmittel vom fünften Knotenpunkt (14) über den vierten Knotenpunkt (13) und die zusätzliche Wärmequelle (23) zum ersten Knotenpunkt (10) strömt,
- das am ersten Knotenpunkt (10) angeordnete Mehrwegeventil derart eingestellt ist, dass Kühlmittel vom vierten Knotenpunkt (13) über die zusätzliche Wärmequelle (23) und den ersten Knotenpunkt (10) zum Außenwärmeübertrager (20) strömt, wobei der Kühlmittelstrom zwischen dem zweiten Knotenpunkt (11) und dem ersten Knotenpunkt (10) über die erste Bypassleitung (28) und der Kühlmittelstrom zwischen dem dritten Knotenpunkt (12) und dem ersten Knotenpunkt (10) über die zweite Bypassleitung (29) unterbunden sind.

12. Klimaanlage nach einem der vorhergehenden Ansprüche 6-8, **dadurch gekennzeichnet, dass** in einem dritten Betriebszustand "Reheat"
- die zusätzliche Wärmequelle (23) ausgeschaltet ist,
- das erste Sperrventil (24) geschlossen ist und das zweite Sperrventil (25) geöffnet ist,
- das am sechsten Knotenpunkt (15) angeordnete Mehrwegeventil derart eingestellt ist, dass der Kühlmittelstrom vom Verdampfer (6) über den sechsten Knotenpunkt (15) zum Kühlkörper (21) unterbunden ist, wobei Kühlmittel vom Verdampfer (6) über den sechsten Knotenpunkt (15) zum zweiten Knotenpunkt (11) strömt,
- das am fünften Knotenpunkt (14) angeordnete Mehrwegeventil derart eingestellt ist, dass Kühlmittel vom Kondensator (8) über den fünften Knotenpunkt (14) zum Heizkörper (22) strömt, wobei der Kühlmittelstrom vom fünften Knotenpunkt (14) zum vierten Knotenpunkt (13) unterbunden ist,
- das am ersten Knotenpunkt (10) angeordnete Mehrwegeventil derart eingestellt ist, dass der Kühlmittelstrom zwischen dem dritten Knotenpunkt (12) und dem ersten Knotenpunkt (10) über die zweite Bypassleitung (29) unterbunden ist, wobei Kühlmittel vom zweiten Knotenpunkt (11) über die erste Bypassleitung (28) und den ersten Knotenpunkt (10) zum Außenwärmeübertrager (20) strömt,

13. Klimaanlage nach einem der vorhergehenden Ansprüche 6-8, **dadurch gekennzeichnet, dass** in einem vierten Betriebszustand "Zuheizen"
- die zusätzliche Wärmequelle (23) eingeschaltet ist,
- das erste Sperrventil (24) geschlossen ist und das zweite Sperrventil (25) geöffnet ist,
- das am sechsten Knotenpunkt (15) angeordnete Mehrwegeventil derart eingestellt ist, dass der Kühlmittelstrom zwischen dem sechsten Knotenpunkt (15) und dem Kühlkörper (21) sowie zwischen dem Kühlkörper (21) und dem achten Knotenpunkt (17) unterbunden ist, wobei das Kühlmittel vom Verdampfer (6) über den sechsten Knotenpunkt (15) zum zweiten Knotenpunkt (11) strömt,
- das am fünften Knotenpunkt (14) angeordnete Mehrwegeventil derart eingestellt ist, dass Kühlmittel vom Kondensator (8) über den fünften Knotenpunkt (14) zum vierten Knotenpunkt (13) strömt, wobei der Kühlmittelstrom zwischen dem fünften Knotenpunkt (14) und dem dritten Knotenpunkt (12) unterbunden ist,
- das am vierten Knotenpunkt (13) angeordnete Mehrwegeventil derart eingestellt ist, dass der Kühlmittelstrom zwischen dem zweiten Knotenpunkt (11) und dem vierten Knotenpunkt (13) unterbunden ist, wobei Kühlmittel vom Kondensator (8) über den fünften Knotenpunkt (14), den vierten Knotenpunkt (13) und die zusätzliche Wärmequelle (23) zum ersten Knotenpunkt (10) strömt,
- das am ersten Knotenpunkt (10) angeordnete Mehrwegeventil derart eingestellt ist, dass Kühlmittel vom zweiten Knotenpunkt (11) über den ersten Knotenpunkt (10) zum Außenwärmeübertrager (20) strömt, wobei Kühlmittel vom vierten Knotenpunkt (13) über die zusätzliche Wärmequelle (23) und den ersten Knotenpunkt (10) zum Heizkörper (22) strömt.

14. Klimaanlage nach einem der vorhergehenden Ansprüche 6-8, **dadurch gekennzeichnet, dass** in einem fünften Betriebszustand "Abtauen"
- die zusätzliche Wärmequelle (23) eingeschaltet ist,
- das erste Sperrventil (24) geschlossen ist und das zweite Sperrventil (25) geöffnet ist,
- das am sechsten Knotenpunkt (15) angeordnete Mehrwegeventil derart eingestellt ist, dass der Kühlmittelstrom zwischen dem sechsten Knotenpunkt (15) und dem Kühlkörper (21) sowie zwischen dem Kühlkörper (21) und dem achten Knotenpunkt (17) unterbunden ist, wobei das Kühlmittel vom Verdampfer (6) über den sechsten Knotenpunkt (15) zum zweiten Knotenpunkt (11) strömt,
- das am fünften Knotenpunkt (14) angeordnete Mehrwegeventil derart eingestellt ist, dass Kühlmittel vom Kondensator (8) über den fünften Knotenpunkt (14) zum Heizkörper (22) strömt, wobei der Kühlmittelstrom vom fünften Knotenpunkt (14) zum vierten Knotenpunkt (13) unterbunden ist,
- das am vierten Knotenpunkt (13) angeordnete Mehrwegeventil derart eingestellt ist, dass Kühlmittel vom zweiten Knotenpunkt (11) über den vierten Knotenpunkt (13) und die zusätzliche Wärmequelle (23) zum ersten Knotenpunkt (10) strömt,
- das am ersten Knotenpunkt (10) angeordnete Mehrwegeventil derart eingestellt ist, dass das Kühlmittel vom vierten Knotenpunkt (13) über die zusätzliche Wärmequelle (23) und den ersten Knotenpunkt (10) zum Außenwärmeübertrager (20) strömt, wobei der Kühlmittelstrom zwischen dem zweiten Knotenpunkt (11) und dem ersten Knotenpunkt (10) über die erste Bypassleitung (28) und der Kühlmittelstrom zwischen dem dritten Knotenpunkt (12) und dem ersten Knotenpunkt (10) über die zweite Bypassleitung (29) unterbunden sind.

15. Klimaanlage nach einem der vorhergehenden Ansprüche, **dadurch gekennzeichnet, dass** die zusätzliche Wärmequelle (23) eine elektrische Wärmequelle, insbesondere eine elektrische Heizvorrichtung ist.

## Claims

1. A climate control system, in particular for a motor vehicle, with a refrigerant circuit (3) which has an evaporator (6) and a condenser (8), and with a coolant circuit (2), wherein the refrigerant circuit (3) and the coolant circuit (2) are thermally coupled to each other in particular in the region of the evaporator (6) and in the region of the condenser (8), wherein the coolant circuit (2) has a line system (19) with junctions (10, 11, 12, 13, 14, 15, 16, 17, 18), wherein a heating body (22), a cooling body (21), an external heat exchanger (20), an additional heat source (23) are integrated into the line system (19), **characterised in that:**
a first bypass line (28) and a second bypass line (29) are integrated into the line system, wherein the first bypass line (28) bypasses the additional heat source (23) from the cooling body (21) to the external heat exchanger (20) and the second bypass line (29) bypasses the additional heat source (23) from the heating body (22) to the external heat exchanger (20).

2. The climate control system according to claim 1, **characterised in that** the additional heat source (23) is disposed in a region located upstream of the external heat exchanger (20) in the flow direction, wherein a first junction (10) which has a valve, such as a multi-way valve, controllable via a controller, which connects the additional heat source (23) and the external heat exchanger (20) together, is disposed between the additional heat source (23) and the external heat exchanger (20).

3. The climate control system according to claim 2, **characterised in that** the line system (19) of the coolant circuit (2) is formed of at least two branches (26, 27), a first branch (26) and a second branch (27), wherein the first branch (26) has at least the cooling body (21) and a second junction (11) disposed in the flow direction between the cooling body (21) and the additional heat source (23), and the second branch (27) has at least the heating body (22) and a third junction (12) disposed in the flow direction between the heating body (22) and the additional heat source (23), wherein the first bypass line (28) connects the second junction (11) to the first junction (10) and/or the second bypass line (29) connects the third junction (12) to the first junction (10), such that the bypass lines (28, 29) bypass the additional heat source (23) in each case to the first junction (10).

4. The climate control system according to claim 3, **characterised in that** a fourth junction (13) with a valve, such as a multi-way valve, controllable via a controller, is disposed in a region located upstream of the additional heat source (23) in the flow direction, wherein the fourth junction (13) is connected to the additional heat source (23) and to the second junction (11).

5. The climate control system according to claim 4, **characterised in that** the second branch (27) has a fifth junction (14) with a valve, such as a multi-way valve, controllable via a controller, wherein the fifth junction (14) is connected to the fourth junction (13) and to the third junction (12) and to the condenser (8).

6. The climate control system according to claim 5, **characterised in that** the first branch (26) has a sixth junction (15) with a valve, such as a multi-way valve, controllable via a controller, wherein the sixth junction (15) is connected to the cooling body (21) and to the second junction (11) and to the evaporator (6).

7. The climate control system according to claim 6, **characterised in that** the first branch (26) has a seventh junction (16) and an eighth junction (17), and the second branch (27) has a ninth junction (18), wherein the seventh junction (16) is connected to the external heat exchanger (20) and to the eighth junction (17) and to the ninth junction (18), wherein the eighth junction (17) is connected to the cooling body (21) and to the evaporator (6), wherein the ninth junction (18) is connected to the condenser (8) and to the heating body (22).

8. The climate control system according to claim 7, **characterised in that** a first shut-off valve (24), controllable via a controller, is disposed between the seventh junction (16) and the ninth junction (18), and/or a second shut-off valve (25), controllable via a controller, is disposed between the seventh junction (16) and the eighth junction (17) .

9. The climate control system according to one of the preceding claims, **characterised in that** the refrigerant circuit (3) has an expansion tank (7) disposed downstream of the condenser (8) in a refrigerant flow direction, and/or an internal heat exchanger (5) disposed downstream of the condenser (8) and/or downstream of the expansion tank (7) in the refrigerant flow direction, and/or an expansion valve (9) disposed upstream of the evaporator (6) in the refrigerant flow direction, and/or a compressor (4) disposed upstream of the condenser (8) in the refrigerant flow direction.

10. The climate control system according to one of the preceding claims 6-8, **characterised in that** in a first "heating" operating mode of the climate control system
- the additional heat source (23) is turned off,
- the first shut-off valve (24) is closed and the second shut-off valve (25) is open,
- the multi-way valve located at the sixth junction (15) is set such that coolant flows from the evaporator (6) to the second junction (11) and the coolant flow between the sixth junction (15) and the cooling body (21) is prevented,
- the multi-way valve located at the fifth junction (14) is set such that coolant flows from the condenser (8) via the fifth junction (14) and the third junction (12) to the heating body (22), wherein the coolant flow between the fifth junction (14) and the fourth junction (13) is prevented,
- the multi-way valve located at the fourth junction (13) is set such that the coolant flow between the second junction (11) and the fourth junction (13) is prevented,
- the multi-way valve located at the first junction (10) is set such that coolant flows from the second junction (11) via the first bypass line (28) and the first junction (10) to the external heat exchanger (20) and the coolant flow between the third junction (12) and the first junction (10) via the second bypass line (29) is prevented.

11. The climate control system according to one of the preceding claims 6-8, **characterised in that** in a second "cooling" operating mode
- the additional heat source (23) is turned off,
- the first shut-off valve (24) is open and the second shut-off valve (25) is closed,
- the multi-way valve located at the sixth junction (15) is set such that coolant flows from the evaporator (6) via the sixth junction (15) to the cooling body (21) and the coolant flow between the sixth junction (15) and the second junction (11) is prevented,
- the multi-way valve located at the fifth junction (14) is set such that the coolant flow between the fifth junction (14) and the third junction (12) and the heating body (22) is prevented, wherein coolant flows from the condenser (8) via the fifth junction (14) to the fourth junction (13),
- the multi-way valve located at the fourth junction (13) is set such that coolant flows from the fifth junction (14) via the fourth junction (13) and the additional heat source (23) to the first junction (10),
- the multi-way valve located at the first junction (10) is set such that coolant flows from the fourth junction (13) via the additional heat source (23) and the first junction (10) to the external heat exchanger (20), wherein the coolant flow between the second junction (11) and the first junction (10) via the first bypass line (28) and the coolant flow between the third junction (12) and the first junction (10) via the second bypass line (29) are prevented.

12. The climate control system according to one of the preceding claims 6-8, **characterised in that** in a third "reheat" operating mode
- the additional heat source (23) is turned off,
- the first shut-off valve (24) is closed and the second shut-off valve (25) is open,
- the multi-way valve located at the sixth junction (15) is set such that the coolant flow from the evaporator (6) via the sixth junction (15) to the cooling body (21) is prevented, wherein coolant flows from the evaporator (6) via the sixth junction (15) to the second junction (11),
- the multi-way valve located at the fifth junction (14) is set such that coolant flows from the condenser (8) via the fifth junction (14) to the heating body (22), wherein the coolant flow from the fifth junction (14) to the fourth junction (13) is prevented,
- the multi-way valve located at the first junction (10) is set such that the coolant flow between the third junction (12) and the first junction (10) via the second bypass line (29) is prevented, wherein coolant flows from the second junction (11) via the first bypass line (28) and the first junction (10) to the external heat exchanger (20).

13. The climate control system according to one of the preceding claims 6-8, **characterised in that** in a fourth "auxiliary heating" operating mode
- the additional heat source (23) is turned on,
- the first shut-off valve (24) is closed and the second shut-off valve (25) is open,
- the multi-way valve located at the sixth junction (15) is set such that the coolant flow between the sixth junction (15) and the cooling body (21) and between the cooling body (21) and the eighth junction (17) is prevented, wherein coolant flows from the evaporator (6) via the sixth junction (15) to the second junction (11),
- the multi-way valve located at the fifth junction (14) is set such that coolant flows from the condenser (8) via the fifth junction (14) to the fourth junction (13), wherein the coolant flow between the fifth junction (14) and the third junction (12) is prevented,
- the multi-way valve located at the fourth junction (13) is set such that the coolant flow between the second junction (11) and the fourth junction (13) is prevented, wherein coolant flows from the condenser (8) via the fifth junction (14), the fourth junction (13), and the additional heat source (23) to the first junction (10),
- the multi-way valve located at the first junction (10) is set such that coolant flows from the second junction (11) via the first junction (10) to the external heat exchanger (20), wherein coolant flows from the fourth junction (13) via the additional heat source (23) and the first junction (10) to the heating body (22).

14. The climate control system according to one of the preceding claims 6-8, **characterised in that** in a fifth "thawing" operating mode
- the additional heat source (23) is turned on,
- the first shut-off valve (24) is closed and the second shut-off valve (25) is open,
- the multi-way valve located at the sixth junction (15) is set such that the coolant flow between the sixth junction (15) and the cooling body (21) and between the cooling body (21) and the eighth junction (17) is prevented, wherein coolant flows from the evaporator (6) via the sixth junction (15) to the second junction (11),
- the multi-way valve located at the fifth junction (14) is set such that coolant flows from the condenser (8) via the fifth junction (14) to the heating body (22), wherein the coolant flow from the fifth junction (14) to the fourth junction (13) is prevented,
- the multi-way valve located at the fourth junction (13) is set such that coolant flows from the second junction (11) via the fourth junction (13) and the additional heat source (23) to the first junction (10),
- the multi-way valve located at the first junction (10) is set such that coolant flows from the fourth junction (13) via the additional heat source (23) and the first junction (10) to the external heat exchanger (20), wherein the coolant flow between the second junction (11) and the first junction (10) via the first bypass line (28) and the coolant flow between the third junction (12) and the first junction (10) via the second bypass line (29) are prevented.

15. The climate control system according to one of the preceding claims, **characterised in that** the additional heat source (23) is an electric heat source, in particular an electric heating device.

## Revendications

1. Système de climatisation, en particulier pour un véhicule automobile, ledit système comprenant un circuit de fluide frigorigène (3) comportant un évaporateur (6) et un condenseur (8), et comprenant un circuit de liquide de refroidissement (2), où le circuit de fluide frigorigène (3) et le circuit de liquide de refroidissement (2) sont couplés thermiquement l'un à l'autre, en particulier dans la zone de l'évaporateur (6) et dans la zone du condenseur (8), où le circuit de liquide de refroidissement (2) présente un système de conduites (19) comportant des points nodaux (10, 11, 12, 13, 14, 15, 17, 18), où un radiateur (22), un refroidisseur (21), un échangeur de chaleur extérieur (20), une source de chaleur supplémentaire (23) sont intégrés dans le système de conduites (19),
**caractérisé en ce qu'**une première conduite de dérivation (28) et une deuxième conduite de dérivation (29) sont intégrées dans le système de conduites, où la première conduite de dérivation (28) contourne la source de chaleur supplémentaire (23) à partir du refroidisseur (21) jusqu'à l'échangeur de chaleur extérieur (20), et la deuxième conduite de dérivation (29) contourne la source de chaleur supplémentaire (23) à partir du radiateur (22) jusqu'à l'échangeur de chaleur extérieur (20).

2. Système de climatisation selon la revendication 1, **caractérisé en ce que** la source de chaleur supplémentaire (23) est disposée dans une zone située, en regardant dans la direction d'écoulement, en amont de l'échangeur de chaleur extérieur (20), où un premier point nodal (10) comportant une vanne, telle qu'une vanne à plusieurs voies, pouvant être commandée par un moyen de contrôle, est agencé entre la source de chaleur supplémentaire (23) et l'échangeur de chaleur extérieur (20), lequel premier point nodal relie l'un à l'autre l'échangeur de chaleur extérieur (20) et la source de chaleur supplémentaire (23).

3. Système de climatisation selon la revendication 2, **caractérisé en ce que** le système de conduites (19) du circuit de liquide de refroidissement (2) est formé en se composant d'au moins deux branches (26, 27), une première branche (26) et une deuxième branche (27), où la première branche (26) présente au moins le refroidisseur (21) et un deuxième point nodal (11) disposé, en regardant dans la direction d'écoulement, entre le refroidisseur (21) et la source de chaleur supplémentaire (23), et la deuxième branche (27) présente au moins le radiateur (22) et un troisième point nodal (12) disposé, en regardant dans la direction d'écoulement, entre le radiateur (22) et la source de chaleur supplémentaire (23), où la première conduite de dérivation (28) relie le deuxième point nodal (11) au premier point nodal (10) et / ou la deuxième conduite de dérivation (29) relie le troisième point nodal (12) au premier point nodal (10), de manière telle que les conduites de dérivation (28, 29) contournent à chaque fois la source de chaleur supplémentaire (23), jusqu'au premier point nodal (10).

4. Système de climatisation selon la revendication 3, **caractérisé en ce qu'**un quatrième point nodal (13) comportant une vanne, telle qu'une vanne à plusieurs voies, pouvant être commandée par un moyen de contrôle, est disposé dans une zone située, en regardant dans la direction d'écoulement, en amont de la source de chaleur supplémentaire (23), où le quatrième point nodal (13) est relié à la source de chaleur supplémentaire (23) et au deuxième point nodal (11).

5. Système de climatisation selon la revendication 4, **caractérisé en ce que** la deuxième branche (27) présente un cinquième point nodal (14) comportant une vanne, telle qu'une vanne à plusieurs voies, pouvant être commandée par un moyen de contrôle, où le cinquième point nodal (14) est relié au quatrième point nodal (13) et au troisième point nodal (12) ainsi qu'au condenseur (8).

6. Système de climatisation selon la revendication 5, **caractérisé en ce que** la première branche (26) présente un sixième point nodal (15) comportant une vanne, telle qu'une vanne à plusieurs voies, pouvant être commandée par un moyen de contrôle, où le sixième point nodal (15) est relié au refroidisseur (21) et au deuxième point nodal (11) ainsi qu'à l'évaporateur (6).

7. Système de climatisation selon la revendication 6, **caractérisé en ce que** la première branche (26) présente un septième point nodal (16) et un huitième point nodal (17), et la deuxième branche (27) présente un neuvième point nodal (18), où le septième point nodal (16) est relié à l'échangeur de chaleur extérieur (20) et au huitième point nodal (17) ainsi qu'au neuvième point nodal (18), où le huitième point nodal (17) est relié au refroidisseur (21) et à l'évaporateur (6), où le neuvième point nodal (18) est relié au condenseur (8) et au radiateur (22).

8. Système de climatisation selon la revendication 7, **caractérisé en ce qu'**une première vanne d'arrêt (24) pouvant être commandée par un moyen de contrôle est disposée entre le septième point nodal (16) et le neuvième point nodal (18) et / ou une deuxième vanne d'arrêt (25) pouvant être commandée par un moyen de contrôle est disposée entre le septième point nodal (16) et le huitième point nodal (17).

9. Système de climatisation selon l'une quelconque des revendications précédentes, **caractérisé en ce que** le circuit de fluide frigorigène (3) présente un réservoir de compensation (7) disposé, en regardant dans une direction d'écoulement du fluide frigorigène, en aval du condenseur (8) et / ou présente un échangeur de chaleur intérieur (5) disposé, en regardant dans la direction d'écoulement du fluide frigorigène, en aval du condenseur (8) et / ou en aval du réservoir de compensation (7) et / ou présente un détendeur (9) disposé, en regardant dans la direction d'écoulement du fluide frigorigène, en amont de l'évaporateur (6) et / ou présente un compresseur (4) disposé, en regardant dans la direction d'écoulement du fluide frigorigène, en amont du condenseur (8).

10. Système de climatisation selon l'une quelconque des revendications précédentes 6 à 8, **caractérisé en ce que**, au cours d'un premier état de fonctionnement du système de climatisation en mode "chauffage",
- la source de chaleur supplémentaire (23) est coupée,
- la première vanne d'arrêt (24) est fermée et la deuxième vanne d'arrêt (25) est ouverte,
- la vanne à plusieurs voies disposée au niveau du sixième point nodal (15) est réglée de manière telle, que du liquide de refroidissement s'écoule à partir de l'évaporateur (6) jusqu'au deuxième point nodal (11), et de manière telle que le flux de liquide de refroidissement soit arrêté entre le sixième point nodal (15) et le refroidisseur (21),
- la vanne à plusieurs voies disposée au niveau du cinquième point nodal (14) est réglée de manière telle, que du liquide de refroidissement s'écoule à partir du condenseur (8) jusqu'au radiateur (22) en passant par le cinquième point nodal (14) et par le troisième point nodal (12), où le flux de liquide de refroidissement est arrêté entre le cinquième point nodal (14) et le quatrième point nodal (13),
- la vanne à plusieurs voies disposée au niveau du quatrième point nodal (13) est réglée de manière telle, que le flux de liquide de refroidissement soit arrêté entre le deuxième point nodal (11) et le quatrième point nodal (13),
- la vanne à plusieurs voies disposée au niveau du premier point nodal (10) est réglée de manière telle, que du liquide de refroidissement s'écoule à partir du deuxième point nodal (11) jusqu'à l'échangeur de chaleur extérieur (20) en passant par la première conduite de dérivation (28) et par le premier point nodal (10), et de manière telle que le flux de liquide de refroidissement soit arrêté entre le troisième point nodal (12) et le premier point nodal (10) situés sur la deuxième conduite de dérivation (29).

11. Système de climatisation selon l'une quelconque des revendications précédentes 6 à 8, **caractérisé en ce que**, au cours d'un deuxième état de fonctionnement en mode "refroidissement",
- la source de chaleur supplémentaire (23) est coupée,
- la première vanne d'arrêt (24) est ouverte et la deuxième vanne d'arrêt (25) est fermée,
- la vanne à plusieurs voies disposée au niveau du sixième point nodal (15) est réglée de manière telle, que du liquide de refroidissement s'écoule à partir de l'évaporateur (6) jusqu'au refroidisseur (21) en passant par le sixième point nodal (15), et de manière telle que le flux de liquide de refroidissement soit arrêté entre le sixième point nodal (15) et le deuxième point nodal (11),
- la vanne à plusieurs voies disposée au niveau du cinquième point nodal (14) est réglée de manière telle, que le flux de liquide de refroidissement soit arrêté entre le cinquième point nodal (14) et le troisième point nodal (12), ainsi qu'entre celui-ci et le radiateur (22), où le liquide de refroidissement s'écoule à partir du condenseur (8) jusqu'au quatrième point nodal (13) en passant par le cinquième point nodal (14),
- la vanne à plusieurs voies disposée au niveau du quatrième point nodal (13) est réglée de manière telle, que du liquide de refroidissement s'écoule à partir du cinquième point nodal (14) jusqu'au premier point nodal (10) en passant par le quatrième point nodal (13) et par la source de chaleur supplémentaire (23),
- la vanne à plusieurs voies disposée au niveau du premier point nodal (10) est réglée de manière telle, que du liquide de refroidissement s'écoule à partir du quatrième point nodal (13) jusqu'à l'échangeur de chaleur extérieur (20) en passant par la source de chaleur supplémentaire (23) et par le premier point nodal (10), où le flux de liquide de refroidissement est arrêté entre le deuxième point nodal (11) et le premier point nodal (10) situés sur la première conduite de dérivation (28), et le flux de liquide de refroidissement est arrêté entre le troisième point nodal (12) et le premier point nodal (10) situés sur la deuxième conduite de dérivation (29).

12. Système de climatisation selon l'une quelconque des revendications précédentes 6 à 8, **caractérisé en ce que**, au cours d'un troisième état de fonctionnement en mode "réchauffage",
- la source de chaleur supplémentaire (23) est coupée,
- la première vanne d'arrêt (24) est fermée et la deuxième vanne d'arrêt (25) est ouverte,
- la vanne à plusieurs voies disposée au niveau du sixième point nodal (15) est réglée de manière telle, que le flux de liquide de refroidissement soit arrêté à partir de l'évaporateur (6) jusqu'au refroidisseur (21) en passant par le sixième point nodal (15), où du liquide de refroidissement s'écoule à partir de l'évaporateur (6) jusqu'au deuxième point nodal (11) en passant par le sixième point nodal (15),
- la vanne à plusieurs voies disposée au niveau du cinquième point nodal (14) est réglée de manière telle, que du liquide de refroidissement s'écoule à partir du condenseur (8) jusqu'au radiateur (22) en passant par le cinquième point nodal (14), où le flux de liquide de refroidissement est arrêté à partir du cinquième point nodal (14) jusqu'au quatrième point nodal (13),
- la vanne à plusieurs voies disposée au niveau du premier point nodal (10) est réglée de manière telle, que le flux de liquide de refroidissement soit arrêté entre le troisième point nodal (12) et le premier point nodal (10) situés sur la deuxième conduite de dérivation (29), où du liquide de refroidissement s'écoule à partir du deuxième point nodal (11) jusqu'à l'échangeur de chaleur extérieur (20) en passant par la première conduite de dérivation (28) et par le premier point nodal (10).

13. Système de climatisation selon l'une quelconque des revendications précédentes 6 à 8, **caractérisé en ce que**, au cours d'un quatrième état de fonctionnement en mode "chauffage supplémentaire",
- la source de chaleur supplémentaire (23) est activée,
- la première vanne d'arrêt (24) est fermée et la deuxième vanne d'arrêt (25) est ouverte,
- la vanne à plusieurs voies disposée au niveau du sixième point nodal (15) est réglée de manière telle, que le flux de liquide de refroidissement soit arrêté entre le sixième point nodal (15) et le refroidisseur (21), ainsi qu'entre le refroidisseur (21) et le huitième point nodal (17), où le liquide de refroidissement s'écoule à partir de l'évaporateur (6) jusqu'au deuxième point nodal (11) en passant par le sixième point nodal (15),
- la vanne à plusieurs voies disposée au niveau du cinquième point nodal (14) est réglée de manière telle, que du liquide de refroidissement s'écoule à partir du condenseur (8) jusqu'au quatrième point nodal (13) en passant par le cinquième point nodal (14), où le flux de liquide de refroidissement est arrêté entre le cinquième point nodal (14) et le troisième point nodal (12),
- la vanne à plusieurs voies disposée au niveau du quatrième point nodal (13) est réglée de manière telle, que le flux de liquide de refroidissement soit arrêté entre le deuxième point nodal (11) et le quatrième point nodal (13), où du liquide de refroidissement s'écoule à partir du condenseur (8) jusqu'au premier point nodal (10) en passant par le cinquième point nodal (14), par le quatrième point nodal (13) et par la source de chaleur supplémentaire (23),
- la vanne à plusieurs voies disposée au niveau du premier point nodal (10) est réglée de manière telle, que du liquide de refroidissement s'écoule à partir du deuxième point nodal (11) jusqu'à l'échangeur de chaleur extérieur (20) en passant par le premier point nodal (10), où du liquide de refroidissement s'écoule à partir du quatrième point nodal (13) jusqu'au radiateur (22) en passant par la source de chaleur supplémentaire (23) et par le premier point nodal (10).

14. Système de climatisation selon l'une quelconque des revendications précédentes 6 à 8, **caractérisé en ce que**, au cours d'un cinquième état de fonctionnement en mode "dégivrage",
- la source de chaleur supplémentaire (23) est activée,
- la première vanne d'arrêt (24) est fermée et la deuxième vanne d'arrêt (25) est ouverte,
- la vanne à plusieurs voies disposée au niveau du sixième point nodal (15) est réglée de manière telle, que le flux de liquide de refroidissement soit arrêté entre le sixième point nodal (15) et le refroidisseur (21), ainsi qu'entre le refroidisseur (21) et le huitième point nodal (17), où le liquide de refroidissement s'écoule à partir de l'évaporateur (6) jusqu'au deuxième point nodal (11) en passant par le sixième point nodal (15),
- la vanne à plusieurs voies disposée au niveau du cinquième point nodal (14) est réglée de manière telle, que du liquide de refroidissement s'écoule à partir du condenseur (8) jusqu'au radiateur (22) en passant par le cinquième point nodal (14), où le flux de liquide de refroidissement est arrêté à partir du cinquième point nodal (14) jusqu'au quatrième point nodal (13),
- la vanne à plusieurs voies disposée au niveau du quatrième point nodal (13) est réglée de manière telle, que du liquide de refroidissement s'écoule à partir du deuxième point nodal (11) jusqu'au premier point nodal (10) en passant par le quatrième point nodal (13) et par la source de chaleur supplémentaire (23),
- la vanne à plusieurs voies disposée au niveau du premier point nodal (10) est réglée de manière telle, que le liquide de refroidissement s'écoule à partir du quatrième point nodal (13) jusqu'à l'échangeur de chaleur extérieur (20) en passant par la source de chaleur supplémentaire (23) et par le premier point nodal (10), où le flux de liquide de refroidissement est arrêté entre le deuxième point nodal (11) et le premier point nodal (10) situés sur la première conduite de dérivation (28), et le flux de liquide de refroidissement est arrêté entre le troisième point nodal (12) et le premier point nodal (10) situés sur la deuxième conduite de dérivation (29).

15. Système de climatisation selon l'une quelconque des revendications précédentes, **caractérisé en ce que** la source de chaleur supplémentaire (23) est une source de chaleur électrique, en particulier un dispositif de chauffage électrique.
